# EUROPÄISCHE PATENTANMELDUNG

(11) **EP 2 851 587 A1**
(43) Veröffentlichungstag der Anmeldung: **25.03.2015**
(21) Anmeldenummer: 13185752.6
(22) Anmeldetag: 24.09.2013
(51) Int. Cl.: F16K 1/42, F16K 25/00

(54) **Ventil zur Absperrung und/oder Regelung des Durchflusses von Fluidströmen und Verfahren zur Nachbearbeitung eines solchen Ventils**

(71) Anmelder: Siemens Aktiengesellschaft, 80333 München (DE)
(72) Erfinder: Bell, Ralf, 45478 Mülheim an der Ruhr (DE); Böer, Isabell, 45479 Mülheim an der Ruhr (DE); Fischer, Thomas, 45479 Mülheim an der Ruhr (DE); Gaio, Giuseppe, 53173 Bonn (DE); Heinze, Raimund, 46049 Oberhausen (DE); Legenbauer, Markus, 45279 Essen (DE); Razowski, Damian, 45473 Mülheim an der Ruhr (DE); Riedel, Thomas, 45481 Mülheim an der Ruhr (DE); Ruda, Stanislaw, 47447 Moers (DE); Ziwes, Ralf, 46539 Dinslaken (DE)

(57) **Zusammenfassung**

Die Erfindung betrifft ein Ventil (1) zur Absperrung und/oder Regelung des Durchflusses von Fluidströmen umfassend ein Ventilgehäuse (2), einen in dem Ventilgehäuse (2) angeordneten Ventildiffusor (3), mit einer Ventilsitzkontaktfläche (8), sowie einen Ventilkörper (5), welcher in dem Ventilgehäuse (2) beweglich angeordnet ist, wobei der Ventilkörper (5) und die Ventilsitzkontaktfläche (8) zumindest bei der Absperrung des Durchflusses von Fluidströmen in einem Kontakt zueinander sind, wobei die Ventilsitzkontaktfläche (8) aus einer verstärkenden Legierung, insbesondere auf Chrom-Basis besteht, wobei die Ventilsitzkontaktfläche (8) im Betrieb einem Verschleiß unterliegt, so dass zumindest ein Bereich mit einem Verschleiß entsteht und wobei zumindest der verschlissene Bereich der Ventilsitzkontaktfläche (8) abtragbar ist.

## Beschreibung

Die Erfindung betrifft ein Ventil zur Absperrung und/oder Regelung des Durchflusses von Fluidströmen umfassend ein Ventilgehäuse, einen in dem Ventilgehäuse angeordneten Ventildiffusor mit einer Ventilsitzkontaktfläche, sowie einen Ventilkörper, welcher in dem Ventilgehäuse beweglich angeordnet ist, wobei der Ventilkörper und die Ventilsitzkontaktfläche zumindest bei der Absperrung des Durchflusses von Fluidströmen in einem Kontakt zueinander sind. Weiterhin betrifft die Erfindung ein Verfahren zur Nachbearbeitung eines solchen Ventils.

In modernen Dampfturbinen entstehen hohe Dampfmassenströme, insbesondere mit niedrigen Frischdampfparametern. Um diese großen Dampfmassenströme zu steuern, werden einzelne Stellventile eingesetzt, welche direkt an oder neben der Turbine platziert werden. Die Regelung der Dampfmenge erfolgt über eine Ventilsitzkontaktfläche und einen Ventilkolben, z. B. einen Ventilkörper, eines Stellventils. Die Stellventile werden durch eigene Stellzylinder direkt angesteuert und können somit entsprechend den Betriebsverhältnissen der Turbine individuell geöffnet werden, so dass der gewünschte Dampfmassenstrom einstellbar ist. Bei extremen Bedingungen wie dem hohen Dampfdruck und den hohen thermischen Spannungen, können Verschleiß und Ermüdung die Verlässlichkeit und Lebensdauer des Ventils jedoch beeinträchtigen. Ventilkomponenten sind häufigen Öffnungs- und Schließzyklen, hohen Stoßkräften und einem signifikanten Dampfdruck während den Kalt-, Warm- oder Heißstarts einer Dampfturbine unterworfen.

Diese wiederholten Beanspruchungen verstärken den Verschleiß und die Ermüdung der Ventile. Zu den Folgen von Ermüdung und Verschleiß von Dampfturbinenventilen gehören Leckagen und die Unfähigkeit das Ventil zu öffnen und mangelnde Abdichtung des Dampfwegs. Solche Ventile umfassen in der Regel ein Ventilgehäuse und einen innerhalb des Ventilgehäuses angeordneten Ventildiffusor durch den einströmender Dampf strömt. Der Massenstrom wird mit Hilfe eines Ventilkörpers eingestellt, der in Richtung des Ventildiffusors bewegbar ausgebildet ist. In komplett geschlossener Position liegt der Ventilkörper an einer Ventilsitzkontaktfläche an, die mit dem Ventildiffusor verbunden ist. In einer geöffneten Position wird zwischen dem Ventilkörper und der Ventilsitzkontaktfläche eine Durchströmfläche gebildet, die direkt mit dem Massenstrom durch das Ventil korreliert ist.

Im geschlossenen Zustand liegt der Ventilkörper an der Ventilsitzkontaktfläche an und bildet eine Kontaktfläche. Diese Kontaktfläche ist durch die Stöße des Ventilkörpers beim Schließen höher belastet. Dieser Bereich unterliegt daher neben Verschleißerscheinungen durch Dampferosionen auch Verschleißerscheinungen durch mechanische Belastungen. Um solchen mechanischen Belastungen entgegen zu wirken, wird in der Regel die Kontaktfläche an der Ventilsitzkontaktfläche gepanzert, was z.B. durch Stellitieren erfolgt. Allerdings ist trotz Panzerung nach einem längeren Betrieb oftmals die Sanierung der Oberfläche des Ventilsitzes aufgrund von Festkörpererosion und Dampferosion erforderlich.

Der Austausch des kompletten Ventilsitzes wäre eine Möglichkeit weiteren Schäden vorzubeugen, wobei der Austausch erschwert ist, da in der Regel Montagearbeiten an der Turbine mit erhöhtem Aufwand einhergehen.

Es ist ebenso denkbar, durch eine entsprechende Materialauswahl dem Verschleiß durch Erosion entgegen zu wirken. Solche Materialien sind allerdings vergleichsweise teuer und in der Regel treten nach einer bestimmten Betriebszeit dennoch Schäden an der Ventilsitzkontaktfläche auf. Sofern die Sanierung einer solchen beschädigten Oberfläche nicht möglich ist, wird die Ventilsitzkontaktfläche abgebaut und durch eine neue ersetzt. Bei Revisionen und bei Stillständen werden die Ventile begutachtet und gegebenenfalls eine Entscheidung vor Ort getroffen, welche Maßnahme erforderlich ist, um die Funktionsweise des Ventils wieder herzustellen. Entweder ist eine Sanierung oder ein kompletter Ventiltausch erforderlich. Für eine hinreichend gute Analyse sind Prüfungen wie z.B. eine Farbeindringprüfung oder eine Ultraschallprüfung erforderlich. Sofern eine Maßnahme ergriffen werden soll, liegt eine nicht zu vernachlässigende, teilweise verlängerte Standzeit zwischen der Entscheidung und der Durchführung vor.

Eine erste Aufgabe der Erfindung ist daher, die Angabe eines verbesserten Ventils, welches die oben genannten Probleme vermeidet. Eine weitere, zweite Aufgabe ist die Angabe eines Verfahrens zur Nachbearbeitung eines solchen Ventils.

Erfindungsgemäß wird die erste Aufgabe mit der Angabe eines Ventils zur Absperrung und/oder Regelung des Durchflusses von Fluidströmen gelöst, umfassend ein Ventilgehäuse, einen in dem Ventilgehäuse angeordneten Ventildiffusor mit einer Ventilsitzkontaktfläche, sowie einen Ventilkörper, welcher in dem Ventilgehäuse beweglich angeordnet ist. Dabei sind der Ventilkörper und die Ventilsitzkontaktfläche zumindest bei der Absperrung des Durchflusses von Fluidströmen in einem Kontakt zueinander. Erfindungsgemäß besteht die Ventilsitzkontaktfläche aus einer verstärkenden Legierung, insbesondere auf Chrom-Basis, wobei die Ventilsitzkontaktfläche im Betrieb einem Verschleiß unterliegt, so dass zumindest ein Bereich mit einem Verschleiß entsteht und wobei zumindest der verschlissene Bereich der Ventilsitzkontaktfläche abtragbar ist.

Erfindungsgemäß wird die zweite Aufgabe durch die Angabe eines Verfahrens zur Nachbearbeitung eines Ventil mit einem Ventilkörper und mit einer oben beschriebenen Ventilsitzkontaktfläche, welche aus einer verstärkende Legierungen, insbesondere auf Chrom-Basis besteht, gelöst. Erfindungsgemäß wird die Ventilsitzkontaktfläche im Betrieb verschlissen, so dass zumindest ein Bereich mit einem Verschleiß entsteht und wobei zumindest der verschlissene Bereich der Ventilsitzkontaktfläche abgetragen wird.

Erfindungsgemäß wird somit vorgeschlagen, ein Ventil derart weiterzubilden, dass dieses eine Ventilsitzkontaktfläche aus einer verstärkenden Legierung, welche in einem Kontakt mit dem Ventilkörper steht, aufweist. D.h. für das Ventil ist nun eine Ventilsitzkontaktfläche aus dem verstärkten Material (z. B. Stellit) vorgesehen. Diese Ventilsitzkontaktfläche ist geometrisch so ausgeführt, dass der Bereich der Kontaktfläche im Neuzustand mit Materialzugabe vorgesehen ist. Die Materialzugabe wird während einer Revision abgetragen. Die Materialabtragung kann bei mehreren Revisionen erfolgen. Diese Ventilsitzkontaktfläche kann daher nach jeder Revision unabhängig von Befunden ausgebessert werden, d.h. der verschlissene Bereich der Ventilsitzkontaktfläche kann nach jeder Revision unabhängig von Befunden abgetragen werden. Das erspart viel Zeit, da Prüfungen von vornherein als nicht erforderlich eingestuft werden. Dadurch verringern sich die Standzeiten eines solchen Ventils. Vorteilhafterweise ist somit ein kompletter Austausch des Diffusors bzw. des Ventilsitzes nicht notwendig. Ebenso ist es nicht erforderlich, den Abbau des kompletten Ventils von der Turbine durchzuführen. Auch dadurch verringern sich die Standzeiten eines solchen Ventils.

Ein besonderer Vorteil entsteht darin, dass eine Revision vorab besser geplant und durchgeführt werden kann, da der Abtrag des verschlissenen Bereichs der Ventilsitzkontaktfläche unabhängig von einem Befund immer stattfinden kann. Dadurch können Farbeindringprüfungen und Ultraschallprüfungen gänzlich entfallen. Eine aufwendige, teure und gesundheitsgefährdende Sanierung entfällt.

Bevorzugt weist der Ventilkörper zudem einen Ventildeckel mit einer Ventildeckeldicke auf. In einer vorteilhaften Ausgestaltung ist der Ventildeckel als Flansch ausgeführt. Vorteilhafterweise ist der Ventildeckel in der Ventildeckeldicke reduzierbar. Dies kann beispielsweise durch Schleifen bewerkstelligt werden.

Bevorzugt bildet das Ventilgehäuse, die Ventilsitzkontaktfläche, der Ventildeckel mit einer Ventildeckeldicke und der Ventilkörper zusammen einen ersten, insbesondere maximalen Hub aus, wobei bei Abtragung des verschlissenen Bereichs der Ventilsitzkontaktfläche die Ventildeckeldicke so abtragbar ist, dass der erste, insbesondere maximale Hub gleich bleibt oder zumindest nahezu gleich bleibt. Bevorzugt bilden das Ventilgehäuse, die Ventilsitzkontaktfläche, der Ventildeckel mit einer Ventildeckeldicke und der Ventilkörper zusammen einen ersten, insbesondere maximalen Hub aus, und wobei bei Abtragung des verschlissenen Bereichs der Ventilsitzkontaktfläche der Ventilkörper so abtragbar ist, dass der erste, insbesondere maximale Hub gleichbleibt oder zumindest nahezu gleichbleibt.

Das heißt, dass gleichzeitig nach jeder Materialabtragung die Position des Ventildeckels bei Bedarf nachgestellt werden kann, um den Hub des Ventils an die nachbearbeitete Kontur des Ventilsitzes anzupassen. Das erfolgt beispielsweise durch mechanische Bearbeitung des Ventildeckels, dessen Ventildeckeldicke (d.h. die Wandstärke des Ventildeckels) im Neuzustand entsprechend dicker ausgeführt wird. Alternativ oder zusätzlich zur Nachbearbeitung des Ventildeckels kann die Materialabtragung zur Anpassung des Hubs auch am Ventilkörper erfolgen. Der Durchfluss durch das Ventil bleibt somit gleich, d.h. der Durchflusskoeffizient bleibt gleich. Dies garantiert z.B. einen sicheren Betrieb der Anlage in der das Ventil Verwendung findet.

Bevorzugt besteht die Ventilsitzkontaktfläche aus einer Legierung auf einer Kobalt-Chrom-Basis. Insbesondere besteht die Ventilsitzkontaktfläche aus Stellit. Dieses eignet sich aufgrund seiner hohen Verschleiß- und Temperaturbeständigkeit, insbesondere für den Einsatz in Kraftwerksanlagen. Bevorzugt ist die Ventilsitzkontaktfläche als eine austauschbare Buchse ausgestaltet. Nach einer maximalen Anzahl von Bearbeitungen ist die Materialabtragung nicht mehr möglich. Für diesen Fall erfolgt dann der Austausch der Buchse mit der entsprechenden Anpassung des Ventildeckels, so dass eine Nachstellung des Hubs wieder möglich ist. Damit ist somit auch hier ein kompletter Austausch des Diffusors bzw. des Ventilsitzes nicht notwendig. Ebenso ist es nicht erforderlich, den Abbau des kompletten Ventils von der Turbine durchzuführen. Dadurch verringern sich die Standzeiten eines solchen Ventils. Die Panzerung des Ventilkörpers kann z.B. in der Regel nur in einer geringeren Dicke ausgeführt werden. Eine Buchse hingegen kann komplett aus einer verstärkenden Legierung ausgeführt werden und ermöglicht somit die Nachbearbeitung der Kontur ohne dabei eine aufgetragene Panzerung, wie es beim Ventilkörper der Fall wäre, komplett abzutragen.

In einer bevorzugten Ausgestaltung ist das Ventil in einer Anlage vorgesehen und die Nachbearbeitung wird bei einer Revision der Anlage durchgeführt.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- FIG 1: eine Querschnittsansicht eines ersten Ausführungsbeispiels eines erfindungsgemäßen Ventils,
- FIG 2: einen Ausschnitt einer Ventilsitzkontaktfläche im Neuzustand.

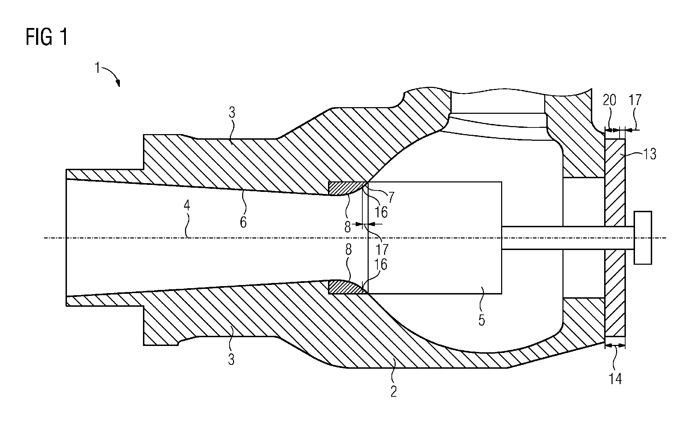

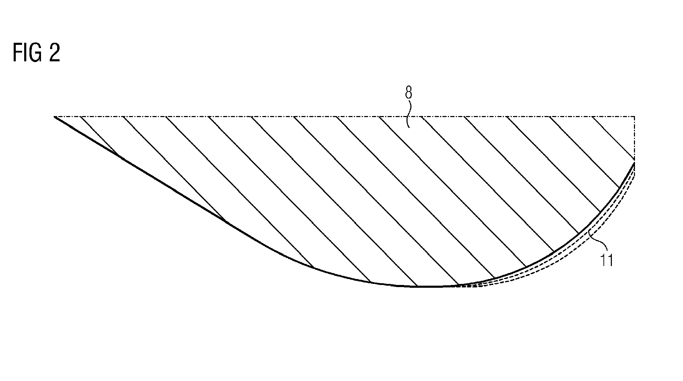

Die Figur zeigt eine Querschnittsansicht eines erfindungsgemäßen Ventils 1. Das Ventil 1 umfasst ein Ventilgehäuse 2 und innerhalb des Ventilgehäuses 2 einen im Wesentlichen rotationssymmetrisch ausgebildeten Ventildiffusor 3. In der Figur 1 ist eine Symmetrieachse 4 eingezeichnet. Der Ventildiffusor 3 ist im Wesentlichen rotationssymmetrisch zu dieser Symmetrieachse 4 ausgebildet. Innerhalb des Ventildiffusors 3 ist ein kegelförmig ausgestalterer Innenmantelbereich 6 ausgebildet, durch den im Betrieb ein Dampf mit vergleichsweise hoher Temperatur und hohem Druck strömt. Am Ventildiffusoranfang 7 ist der Ventildiffusor 3 am Gehäuse 2 fest angeordnet. Der Ventildiffusor 3 umfasst eine Ventilsitzkontaktfläche 8, die am Ventildiffusoranfang 7 angeordnet ist und zum Kontaktieren mit einem Ventilkörper 5 ausgebildet ist. Der Ventilkörper 5 und die Ventilsitzkontaktfläche 8 sind zumindest bei der Absperrung des Durchflusses von Fluidströmen in einem Kontakt zueinander. Die Ventilsitzkontaktfläche 8 besteht nun aus einer verstärkenden Legierung, insbesondere auf Chrom-Basis, wobei die Ventilsitzkontaktfläche 8 im Betrieb einem Verschleiß unterliegt, so dass zumindest ein Bereich mit einem Verschleiß entsteht. Bei einer Revision wird nun zumindest der verschlissene Bereich der Ventilsitzkontaktfläche 8 abgetragen. Dabei wird die Ventilsitzkontaktfläche 8 so ausgeführt, dass ein Abtrag möglich ist. D.h. im Neuzustand ist eine Materialzugabe vorgesehen, welche in FIG 2 gezeigt wird. So können bei mehreren Revisionen die verschlissenen Bereiche abgetragen werden. Somit ist ein Austausch des Ventils oder des Ventildiffusors 3 nicht mehr so oft notwendig.

Der Ventilkörper 5 weist zudem einen Ventildeckel 13 mit einer Ventildeckeldicke 14 auf. Durch den Ventildeckel 13 kann der Ventilkörper 5 am Ventilgehäuse 2 befestigt sein. Dabei kann der Ventildeckel 13 als Flansch ausgeführt sein. Dadurch ist der Ventildeckel 13 in der Ventildeckeldicke 14 einfach reduzierbar, d.h. abtragbar.

Das Ventilgehäuse 2, die Ventilsitzkontaktfläche 8, der Ventildeckel 13 mit einer Ventildeckeldicke 14 und der Ventilkörper 5 bilden zusammen einen ersten, insbesondere einen maximalen Hub aus. Bei Abtragung des verschlissenen Bereichs der Ventilsitzkontaktfläche 8 ist die Ventildeckeldicke 14 so abtragbar, dass dieser erste, insbesondere maximale Hub gleichbleibt oder zumindest nahezu gleichbleibt. D.h. wird der verschlissene Bereich bis z.B. an einer Stelle 16 um einen Betrag 17 abgetragen, so wird der Ventildeckel 13 ebenfalls um einen Betrag 17 reduziert zu einer Wanddicke 20. Somit bleibt der erste, insbesondere maximale Hub der gleiche oder nahezu der gleiche. Dabei kann die Ventildeckeldicke 14 durch mechanische Bearbeitung reduziert werden. Der Ventildeckel 13 wird daher in der Ventildeckeldicke 14 im Neuzustand entsprechend dicker ausgeführt. Der Ventildeckel 13 kann z.B. abgeschliffen werden.

Dies bedeutet, dass gleichzeitig nach jeder Materialabtragung bei der Ventilsitzkontaktfläche 8 die Position des Ventildeckels 13 bei Bedarf nachgestellt wird, um den Hub des Ventils 1 an die nachbearbeitete Kontur anzupassen.

Alternativ oder zusätzlich kann auch der Ventilkörper 5 an einer anderen Stelle, z.B. direkt bei der Kontaktfläche mit der Ventilsitzkontaktfläche 8 reduziert werden, um den ersten, insbesondere maximalen Hub wieder herzustellen.

Auch kann die Ventilsitzkontaktfläche 8 eine Legierung auf einer Kobalt-Chrom-Basis sein, insbesondere ein Stellit.

Alternativ ist zumindest die Ventilsitzkontaktfläche 8 als eine austauschbare Buchse (nicht gezeigt) ausgestaltet. Die Buchse hat nunmehr den Kontakt mit dem Ventilkörper 5. Nach einer maximalen Anzahl von Bearbeitungen ist die Materialabtragung von der Buchse nicht mehr möglich. Für diesen Fall erfolgt dann der Austausch der Buchse mit der entsprechenden Anpassung des Ventildeckels 13, so dass eine Nachstellung des ersten, insbesondere maximalen Hubs wieder möglich ist.

Erfindungsgemäß erfordert die Bearbeitung des Ventilsitzkontaktfläche 8 und des Ventildeckels 13 bzw. des Ventilkörpers 5 nicht den Abbau des kompletten Ventils von der Turbine. Erfindungsgemäß ist dadurch der Austausch eines kompletten Gehäuses 2 und/oder Diffusors 3 nicht mehr notwendig.

Die Revision kann vorab besser geplant werden, da die mechanische Bearbeitung unabhängig von dem Befund immer stattfindet. Die Ventilsitzkontaktfläche 8 kann daher nach jeder Revision unabhängig von Befunden ausgebessert werden. Das erspart viel Zeit, da Prüfungen für den Befund von vornherein als nicht erforderlich eingestuft werden und somit entfallen. Eine aufwendige, teure und gesundheitsgefährdende Sanierung entfällt.

Ist die Ventilsitzkontaktfläche 8 eine austauschbare Buchse, kann diese vereinfacht ohne lange Stillstandszeiten ausgetauscht werden.

Die Panzerung eines Ventilkörpers des Stands der Technik kann in der Regel nur in einer geringen Dicke ausgeführt werden. Die Ventilsitzkontaktfläche 8 kann hingegen komplett mit verstärktem Material ausgeführt werden und ermöglicht somit die Nachbearbeitung der Kontur ohne dabei eine aufgetragene Panzerung, wie es beim Ventilkörper des Stands der Technik der Fall wäre, komplett abzutragen.

## Patentansprüche

1. Ventil (1) zur Absperrung und/oder Regelung des Durchflusses von Fluidströmen umfassend ein Ventilgehäuse (2), einen in dem Ventilgehäuse (2) angeordneten Ventildiffusor (3) mit einer Ventilsitzkontaktfläche (8), sowie einen Ventilkörper (5), welcher in dem Ventilgehäuse (2) beweglich angeordnet ist, wobei der Ventilkörper (5) und die Ventilsitzkontaktfläche (8) zumindest bei der Absperrung des Durchflusses von Fluidströmen in einem Kontakt zueinander sind,
**dadurch gekennzeichnet, dass**
die Ventilsitzkontaktfläche (8) aus einer verstärkende Legierung, insbesondere auf Chrom-Basis, besteht, wobei die Ventilsitzkontaktfläche (8) im Betrieb einem Verschleiß unterliegt, so dass zumindest ein Bereich mit einem Verschleiß entsteht und wobei zumindest der verschlissene Bereich der Ventilsitzkontaktfläche (8) abtragbar ist.

2. Ventil (1) nach Anspruch 1,
**dadurch gekennzeichnet, dass**
der Ventilkörper (5) zudem einen Ventildeckel (13) mit einer Ventildeckeldicke (14) aufweist.

3. Ventil (1) nach Anspruch 2,
**dadurch gekennzeichnet, dass**
der Ventildeckel (13) als Flansch ausgeführt ist.

4. Ventil (1) nach einem der vorhergehenden Ansprüche 2 - 3,
**dadurch gekennzeichnet, dass**
der Ventildeckel (13) in der Ventildeckeldicke (14) reduzierbar ist.

5. Ventil (1) nach einem der vorhergehenden Ansprüche 2 - 4,
**dadurch gekennzeichnet, dass**
das Ventilgehäuse (2), die Ventilsitzkontaktfläche (8), der Ventildeckel (13) mit einer Ventildeckeldicke (14) und der Ventilkörper (5) zusammen einen ersten, insbesondere maximalen Hub ausbilden und dass bei Abtragung des verschlissenen Bereichs der Ventilsitzkontaktfläche (8) die Ventildeckeldicke (14) so abtragbar ist, dass der erste, insbesondere maximale Hub gleichbleibt oder zumindest nahezu gleichbleibt.

6. Ventil (1) nach einem der vorhergehenden Ansprüche 2 - 4,
**dadurch gekennzeichnet, dass**
das Ventilgehäuse (2), die Ventilsitzkontaktfläche (8), der Ventildeckel (13) mit einer Ventildeckeldicke (14) und der Ventilkörper (5) zusammen einen ersten, insbesondere maximalen Hub ausbilden und dass bei Abtragung des verschlissenen Bereichs der Ventilsitzkontaktfläche (8) der Ventilkörper (5) so abtragbar ist dass der erste, insbesondere maximale Hub, gleichbleibt oder zumindest nahezu gleichbleibt.

7. Ventil (1) nach einem der vorhergehenden Ansprüche,
**dadurch gekennzeichnet, dass**
die Ventilsitzkontaktfläche (8) aus einer Legierung auf einer Kobalt-Basis besteht.

8. Ventil (1) nach einem der vorhergehenden Ansprüche,
**dadurch gekennzeichnet, dass**
die Ventilsitzkontaktfläche (8) ein Stellit ist.

9. Ventil (1) nach einem der vorhergehenden Ansprüche,
**dadurch gekennzeichnet, dass**
die Ventilsitzkontaktfläche (8) als eine austauschbare Buchse ausgestaltet ist.

10. Verfahren zur Nachbearbeitung eines Ventils (1) mit einem Ventilkörper (5) und mit einer Ventilsitzkontaktfläche (8), welche aus einer verstärkenden Legierung, insbesondere auf Chrom-Basis besteht nach einem der obigen Ansprüche,
**dadurch gekennzeichnet, dass**
die Ventilsitzkontaktfläche (8) im Betrieb verschlissen wird, so dass zumindest ein Bereich mit einem Verschleiß entsteht und wobei zumindest der verschlissene Bereich der Ventilsitzkontaktfläche (8) abgetragen wird.

11. Verfahren nach Anspruch 10,
**dadurch gekennzeichnet, dass**
das Ventil (1) in einer Anlage vorgesehen ist und die Nachbearbeitung bei einer Revision der Anlage durchgeführt wird.

12. Verfahren nach einem der Ansprüche 10-11,
**dadurch gekennzeichnet, dass**
der Ventilkörper (5) zudem einen Ventildeckel (13) mit einer Ventildeckeldicke (14) aufweist, mit welchem der Ventilkörper (5) an einem Ventilgehäuse (2) befestigt wird und wobei das Ventilgehäuse (2), die Ventilsitzkontaktfläche (8), der Ventildeckel (13) mit der Ventildeckeldicke (14) und der Ventilkörper (5) zusammen einen ersten, insbesondere maximalen Hub ausbilden und dass bei Abtragung des verschlissenen Bereichs der Ventilsitzkontaktfläche (8) die Ventildeckeldicke (14) so abgetragen wird, dass der erste, insbesondere maximale Hub gleichbleibt oder zumindest nahezu gleichbleibt.

13. Verfahren nach einem der Ansprüche 10-11,
**dadurch gekennzeichnet, dass**
der Ventilkörper (5) zudem ein Ventildeckel (13) mit einer Ventildeckeldicke (14) aufweist, mit welchem der Ventilkörper (5) an einem Ventilgehäuse (2) befestigt wird und wobei das Ventilgehäuse (2), die Ventilsitzkontaktfläche (8), der Ventildeckel (13) mit der Ventildeckeldicke (14) und der Ventilkörper (5) zusammen einen ersten, insbesondere maximalen Hub ausbilden und dass bei Abtragung des verschlissenen Bereichs der Ventilsitzkontaktfläche (8) der Ventilkörper (5) so abgetragen wird, dass der erste, insbesondere maximale Hub gleichbleibt oder zumindest nahezu gleichbleibt.
